# EUROPEAN PATENT APPLICATION

(11) **EP 4 228 292 A1**
(43) Date of publication of application: **16.08.2023**
(21) Application number: 21893886.8
(22) Date of filing: 16.11.2021
(51) Int. Cl.: H04W 4/029, H04W 12/04, H04W 12/06

(54) **TERMINAL POSITIONING METHOD, TERMINAL POSITIONING SYSTEM, STORAGE MEDIUM AND ELECTRONIC DEVICE**

(30) Priority: 20.11.2020 CN 202011312290
(71) Applicant: Sanechips Technology Co., Ltd., Shenzhen, Guangdong 518055 (CN)
(72) Inventor: YU, Dongyan, Shenzhen, Guangdong 518057 (CN)
(74) Representative: Chimini, Francesco
(86) International application number: PCT/CN2021/130872
(87) International publication number: WO 2022/105739

(57) **Abstract**

Provided are a terminal positioning method and system, a storage medium and an electronic device. The terminal positioning method includes: acquiring a positioning request for positioning a target terminal; verifying a target device identifier in response to the positioning request; in a case that the target device identifier is verified, acquiring encrypted information allocated to the target terminal, wherein the encrypted information includes a target key and a target algorithm corresponding to the target key; sending the encrypted information to the target terminal and sending the target algorithm in the encrypted information to a positioning server allocated to the target terminal, such that the target terminal and the positioning server use the encrypted information to obtain the location information of the target terminal. The present disclosure solves the problem of terminal information leakage caused by illegal interception of terminal positioning information, thereby the data transmission security in the positioning process is guaranteed.

## Description

### Cross-Reference to Related Application

The present application claims the priority of Chinese patent application No. 202011312290.5 filed on 20 November 2020, the content of which is incorporated herein by reference in its entirety.

### Technical Field

Embodiments of the present disclosure relate to the field of communications, and in particular, to a terminal positioning method, terminal positioning system, storage medium and electronic device.

### Background

During the process of using a terminal, it is usually needed to acquire a geographical location of the terminal. Generally, the positioning of the terminal relies on a traditional positioning device such as a GPS and a Beidou system. With the development of communication technologies, positioning of a terminal can be achieved at present without depending on traditional positioning devices.

A positioning method that does not depend on a traditional positioning apparatus mainly relies on a positioning server (ESMLC/GMLC) to calculate and evaluate received positioning information, so as to calculate and obtain a geographical location of a terminal, and feed back the geographical location to the terminal. The whole positioning process is completed by the co-participation of the terminal, the wireless access device, the core network device and the positioning server. The positioning information required by the positioning server to calculate the address position of the terminal mainly includes geographical position information of the wireless access device and measurement data of the terminal. A core network device and a positioning server perform data interaction via the Internet, but the security of data transmission between the core network device and the positioning server is not guaranteed, that is, the transmission security of positioning information data and positioning result data between a terminal and the positioning server cannot be ensured. Thus, the illegal positioning device can easily intercept complete measurement data provided by the terminal, and the illegal positioning device can estimate location information of the terminal through an algorithm, so as to achieve the purposes of monitoring the terminal and acquiring privacy data of the terminal.

In a related positioning method, since there is no complete security mechanism between a terminal and a positioning server, secure transmission of positioning information data and positioning result data cannot be ensured, so that after positioning information and a positioning result are intercepted by an illegal positioning device, the illegal positioning device can monitor the terminal illegally, and cannot acquire privacy data of the terminal, thereby leading to leakage of terminal information.

### Summary

Provided is a terminal positioning method. The method includes: acquiring a positioning request for positioning a target terminal, wherein the positioning request carries a terminal identifier of the target terminal and a target device identifier of an initiating device which triggers the positioning request; in response to the positioning request, verifying the target device identifier; in the case that the target device identifier passes the verification, acquiring encryption information allocated to the target terminal, wherein the encryption information comprises a target key and a target algorithm corresponding to the target key; sending the encryption information to the target terminal, and sending the target algorithm in the encryption information to a positioning server allocated for the target terminal, so that the target terminal and the positioning server use the encryption information to obtain position information about the target terminal.

According to an embodiment of the present disclosure, a terminal positioning method is provided, which includes: in a case in which a core network device responds to a positioning request and verification of a target device identifier is passed, receiving allocated encryption information, wherein the positioning request carries a terminal identifier of a target terminal which is requested to be positioned and the target device identifier of an initiating device which triggers the positioning request, the encryption information comprises a target key and a target algorithm corresponding to the target key; receiving a usage level of the target key, and transforming the target key according to the usage level to obtain a positioning key; using the positioning key to encrypt a positioning parameter, and sending the encrypted positioning parameter to a positioning server, so that the positioning server uses the positioning parameter to obtain location information about the target terminal.

Provided is a terminal positioning method, which includes: in a case that a core network device responds to a positioning request and verification of a target device identifier is passed, receiving an allocated target algorithm, wherein the positioning request carries a terminal identifier of a target terminal which is requested to be positioned and the target device identifier of an initiating device which triggers the positioning request; acquiring the target key corresponding to the target algorithm from a locally stored mapping relationship, allocating a usage level to the target key, sending the usage level to the target terminal, and at the same time, transforming the target key according to the usage level to obtain a positioning key; In a case that an encrypted positioning parameter sent by the target terminal is received, using the described positioning key to perform decryption so as to obtain the described positioning parameter; calculating and obtaining the location information of the target terminal according to the positioning parameters, and sending the location information encrypted by the positioning key to the target terminal.

According to an embodiment of the present disclosure, also provided is a terminal positioning system, which includes: a target terminal, a core network device, and a positioning server. The core network device is configured to acquire a positioning request for positioning the target terminal, verify a target device identifier in response to the positioning request, In a case that the target device identifier passes the verification, acquire encryption information allocated to the target terminal, send the encryption information to the target terminal, and send the target algorithm in the encryption information to a positioning server allocated to the target terminal. The positioning request carries a terminal identifier of the target terminal and the target device identifier of an initiating device that triggers the positioning request, and the encryption information includes a target key and a target algorithm corresponding to the target key; the positioning server is configured to receive the described target algorithm, acquire the described target key corresponding to the described target algorithm from a locally stored mapping relationship, allocate a usage level to the described target key, and send the described usage level to the described target terminal, and at the same time, transform the described target key according to the described usage level to obtain a positioning key; receive an encrypted positioning parameter, and use the positioning key for decryption to obtain the positioning parameter; calculate and obtain the location information of the target terminal according to the positioning parameters, and send the location information encrypted by the positioning key to the target terminal; the target terminal is configured to receive the encryption information and the usage level of the target key, and transform the target key according to the usage level to obtain the positioning key; encrypt the positioning parameter by using the positioning key, and send the encrypted positioning parameter to a positioning server; receive the encrypted location information, and use the positioning key to decrypt same to obtain the location information.

Embodiments of the present disclosure further provide a computer readable storage medium. The computer readable storage medium stores a computer program. When being executed by a processor, the computer program executes the steps in any one of the foregoing method embodiments.

Embodiments of the present disclosure also provide an electronic device, comprising a memory and a processor. The memory stores a computer program. The processor is configured to run the computer program so as to execute the steps in any one of the method embodiments.

### Brief Description of the Drawings

Fig. 1 is a structural diagram of application hardware of a terminal positioning method according to an embodiment of the present disclosure;
Fig. 2 is a schematic diagram of an application environment of a terminal positioning method according to an embodiment of the present disclosure;
Fig. 3 is a schematic flowchart of a terminal positioning method according to an embodiment of the present disclosure;
Fig. 4 is a schematic flowchart of a terminal positioning method according to an embodiment of the present disclosure; and
Fig. 5 is a schematic interaction diagram of a method for positioning a mobile terminal according to an embodiment of the present disclosure.

### Detailed Description of the Embodiments

Embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

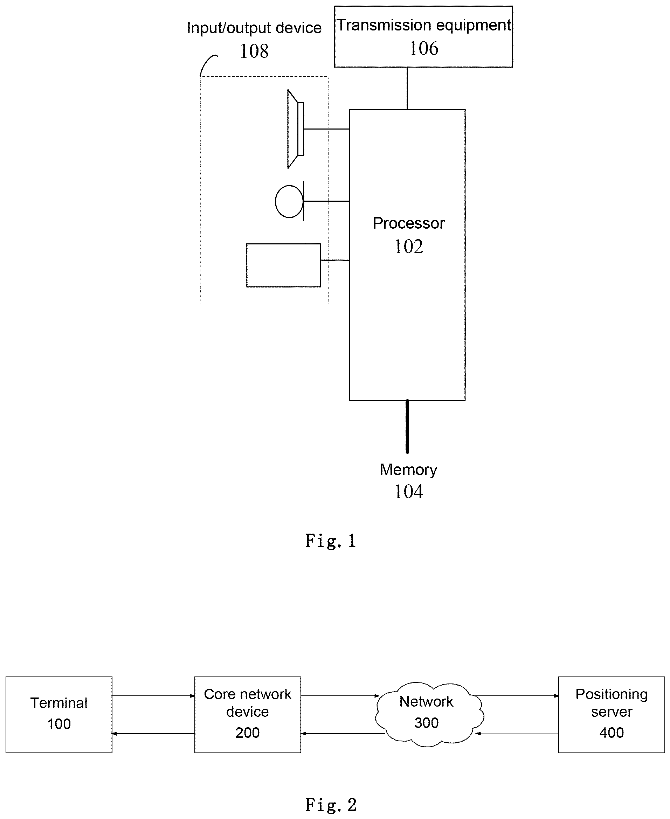

The method provided in the embodiments of the present application may be implemented in a mobile terminal, a computer terminal, or a similar computing apparatus. Taking the mobile terminal running as an example, Fig. 1 is a hardware structure block diagram of a terminal positioning method according to an embodiment of the present disclosure. As shown in Fig. 1, the mobile terminal may include one or more (only one is shown in Fig. 1) processors 102 (the processors 102 may include, but are not limited to, a processing apparatus such as a microprocessor MCU or a programmable logic device FPGA) and a memory 104 for storing data, and the mobile terminal may further include a transmission device 106 and an input/output device 108 for a communication function. A person of ordinary skill in the art may understand that the structure shown in Fig. 1 is merely exemplary, which does not limit the structure of the mobile terminal. For example, the mobile terminal may include more or less components than shown in Fig. 1, or have a configuration different from that shown in Fig. 1.

The memory 104 may be configured to store a computer program, for example, a software program and a module of application software, such as a computer program corresponding to the terminal positioning method in this embodiment. The processor 102 runs the computer program stored in the memory 104, so as to execute various function applications and data processing, that is, implement the terminal positioning method. Memory 104 may include high-speed random access memory, and may also include non-volatile memory, such as one or more magnetic storage devices, flash memory, or other non-volatile solid-state memory. In some instances, memory 104 may further include memory remotely located with respect to processor 102, which may be connected to mobile terminals over a network. Examples of such networks include, but are not limited to, the Internet, intranets, local area networks, mobile communication networks, and combinations thereof.

The transmitting device 106 is configured to receive or transmit data via a network. Specific examples of the described network may include a wireless network provided by a communication provider of the mobile terminal. In one example, the transfer device 106 may comprise a Network Interface Controller (NIC) that may be coupled to other network devices via a base station to communicate with the Internet. In one example, the transmission device 106 may be a Radio Frequency (RF) module for communicating wirelessly with the Internet.

The embodiments of the present application can run on the network architecture shown in Fig. 2. As shown in Fig. 2, the network architecture comprises a terminal 100, a core network device 200, a network 300 and a positioning server 400, wherein the terminal 100 performs data interaction with the core network device 200 via a wireless access device, and the core network device 200 sends data of the terminal 100 to the positioning server 400 via the network 300. The positioning server 400 forwards data to the terminal 100 via the network 300 via the relay of the core network device 200.

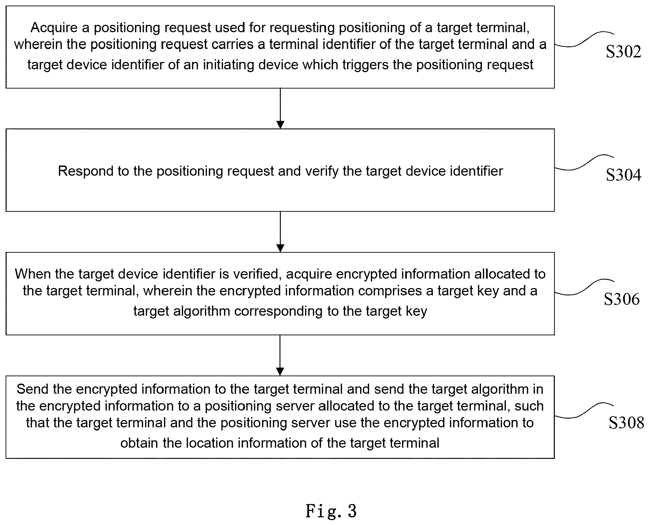

The present embodiment provides a terminal positioning method running on the described network architecture. Fig. 3 is a flowchart of a terminal positioning method according to an embodiment of the present disclosure. As shown in Fig. 3, the terminal positioning method comprises the following steps:
Step S302, acquiring a positioning request for positioning a target terminal, wherein the positioning request carries a terminal identifier of the target terminal and a target device identifier of an initiating device which triggers the positioning request;
Step S304, verifying a target device identifier in response to the positioning request;
Step S306, In a case that the target device identifier passes the verification, acquiring encryption information allocated to the target terminal, wherein the encryption information comprises a target key and a target algorithm corresponding to the target key; and
Step S308, sending the encrypted information to the target terminal, and sending the target algorithm in the encrypted information to the positioning server allocated for the target terminal, so that the target terminal and the positioning server use the encrypted information to obtain the location information of the target terminal.

By means of the described steps, when a core network device receives a positioning request, a device identifier of an initiator of the positioning request is verified; and In a case that the device identifier is verified, a key and an algorithm are allocated to a terminal and a positioning server, so that the terminal and the positioning server encrypt interaction data using the key and the algorithm. The present invention improves data security of a terminal and a positioning server when performing positioning data transmission, and solves the problem that transmission data is illegally acquired because there is no security mechanism for data transmission between the terminal and the positioning server. Further, since the algorithm is sent only by the positioning server for data transmission through the network, the key is prevented from being acquired in the network transmission process, the security of encrypted data transmission is further ensured by ensuring the security of the key, and the key is prevented from being illegally acquired. Thus, the problems of terminal information leakage and terminal illicit monitoring and terminal private data leakage caused by illicit interception of positioning information about a terminal due to data transmission insecure in a positioning process are solved.

It should be noted that, the device for initiating the positioning request is not limited herein. The execution body of the above steps may be a core network device, but is not limited thereto. The core network device comprises at least a mobility management entity and a home location register.

In some embodiments, the step of verifying the target device identifier in response to the locating request comprises: looking up the target device identifier in a device identifier list locally stored; In a case that a target device identifier is found in a device identifier list, determining that the target device identifier is verified; in the case that the target device identifier is not found in the device identifier list, it is determined that the target device identifier is not verified, and the positioning request is rejected.

The device identifier list is stored in the core network device. The device identifier list contains the terminal identifier of the terminal which has been authorized to qualify for the positioning request and the server identifier of the positioning server. The identifier existing in the device identifier list is considered as the corresponding device having the qualification of initiating the positioning request legitimately. A target device identifier can be found in a device identifier list, and then it is determined that an initiating device corresponding to the target device identifier has the qualification of initiating a positioning request, and the target device identifier is verified.

If the target device identifier fails to be found in the device identifier list stored in the described core network device, it is determined that the initiating device corresponding to the target device identifier is not qualified to initiate a positioning request, and is an invalid initiating device; and in a case that the initiating device which initiates the positioning request is not valid, the positioning request is refused, and the acquisition work of the key and the algorithm is not performed.

By means of the described steps, before encryption information is allocated to a terminal and a positioning server, the encryption information is allocated to the terminal and the positioning server only when a device identifier of an initiating device can be found in a device identifier list by verifying the legality of the device initiating the positioning request, and it is determined that the initiation of the positioning request is legal. By verifying the validity of the positioning request, the data transmission security in the positioning process is further ensured.

In some embodiments, in the case that the target device identifier is verified, acquiring the encryption information allocated to the target terminal comprises: sending an allocation request to a home location register through a mobility management entity; acquiring a target key allocated by a home location register to a target terminal and a target algorithm corresponding to the target key.

In some embodiments, the mobility management entity in the core network device implementing the method for positioning a terminal obtains the positioning request, in response to a positioning request, sending an allocation request to a home location register; and after receiving the allocation request, verifying the described target device identifier, and In a case that the verification of the target device identifier is passed, the home location register acquiring a target key and a target algorithm, and sending the target key and the target algorithm to a mobility management entity, so that the mobility management entity sends the target key and the target algorithm to a target terminal, sending only the target algorithm to the positioning server.

In the core network device, the list of device identities is stored in a home location register. The mobility management entity is responsible for distributing the target key and the target algorithm.

In some embodiments, acquiring encryption information allocated for a target terminal comprises: allocating a positioning server for the target terminal; determining a target key corresponding to a positioning server from keys corresponding to target terminals; determining a target algorithm according to the target key; determining a target key and a target algorithm as encryption information.

In some embodiments, in the device identifier list, a terminal identifier, a positioning server identifier, a key and an algorithm are stored. A key and an algorithm have an association relationship. A corresponding algorithm is obtained by determining a key, and at the same time, a corresponding key can also be obtained by means of a determined algorithm. In this embodiment, an algorithm for obtaining a corresponding key is taken as an example.

In some embodiments, the key is obtained by terminal identifier and positioning server identifier lookup. There is no fixed association relationship between the terminal and the positioning server, the terminal can establish data transmission with a plurality of positioning servers, and the positioning server can also establish data transmission with a plurality of terminals.

In some embodiments, the positioning server is a positioning server specified by the core network device for the target terminal to calculate location information of the target terminal based on the terminal identifier of the target terminal in the location request.

In some embodiments, after obtaining a positioning request, a mobility management entity in a core network device designates a positioning server for a target terminal, and adds a terminal identifier of the target terminal, a target device identifier and a server identifier of the positioning server designated for the target terminal into an allocation request.

In some embodiments, in the device identifier list of the home location register in the core network device, the key, the terminal identifier and the positioning server identifier have an association relationship. If both the terminal identifier and the positioning server identifier are determined, the corresponding key is found through the correspondence in the device identifier list.

In some embodiments, when receiving an allocation request and In a case that a target device identifier is verified, a home location register searches for a key corresponding to the target terminal identifier via a terminal identifier of a target terminal, then determines a target key from the keys corresponding to the target terminal identifier via a server identifier of a positioning server, and determines a target algorithm via the target key.

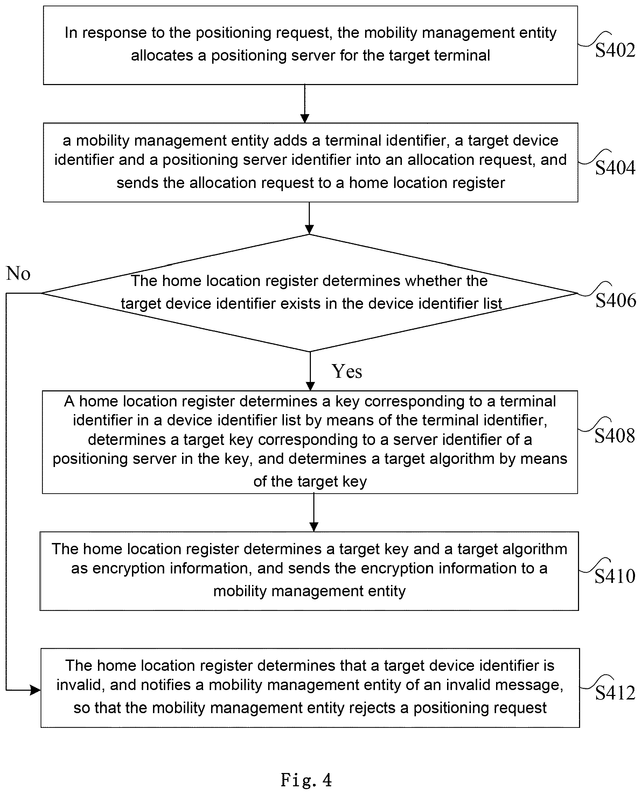

In some embodiments, as shown in Fig. 4, the process of obtaining the encrypted information includes the following steps:
Step S402, the mobility management entity allocates a positioning server for the target terminal in response to the positioning request;
Step S404, a mobility management entity adds a terminal identifier, a target device identifier and a positioning server identifier into an allocation request, and sends the allocation request to a home location register;
Step S406, the home location register judges whether a target device identifier exists in the device identifier list;
If a result of the determination in Step S406 is yes, Step S408 is executed; if the result of the determination in Step S406 is no, Step S412 is executed;
Step S408, the home location register determines in the device identifier list a key corresponding to the terminal identifier via the terminal identifier, determines in the key a target key corresponding to the server identifier of the positioning server, and determines a target algorithm via the target key;
Step S410, a home location register determines a target key and a target algorithm as encryption information, and sends same to a mobility management entity; and
Step S412, the home location register determines that the target device identifier is invalid, and notifies the mobility management entity of an invalid message, so that the mobility management entity rejects the positioning request.

By means of the described steps, a device identifier list is stored in a home location register of a core network device, searching for a target key and a target algorithm in a device identifier list by means of a terminal identifier and a positioning server identifier when verification of an initiating device is passed, associating a key and an algorithm with a terminal and a positioning server, and when the same terminal performs data transmission with different positioning servers. By using different keys and algorithms, the security of the keys and algorithms themselves is enhanced, thereby further improving the security of data transmission in the positioning process.

In some embodiments, after sending the encrypted information to the target terminal and sending the target algorithm in the encrypted information to the positioning server allocated to the target terminal, the terminal positioning method further comprises:
A target terminal receiving a usage level of a target key sent by a positioning server, and transforming the target key according to the usage level to obtain a positioning key; and
The target terminal uses the positioning key to encrypt the positioning parameter, and sends the encrypted positioning parameter to the positioning server, so that the positioning server uses the positioning parameter to obtain the location information of the target terminal.

In some embodiments, after sending the encrypted information to the target terminal and sending the target algorithm in the encrypted information to the positioning server allocated to the target terminal, the terminal positioning method further comprises:
In a case that a positioning server receives a target algorithm, acquiring a target key corresponding to the target algorithm from a locally stored mapping relationship, allocating a usage level for the target key, and sending the usage level to a target terminal, and at the same time, transforming the target key according to the usage level to obtain a positioning key;
In a case that a positioning server receives an encrypted positioning parameter sent by a target terminal, using a positioning key to perform decryption to obtain the positioning parameter; and
The positioning server obtains the location information of the target terminal through calculation according to the positioning parameters, and sends the position information encrypted by the positioning key to the target terminal.

The mapping relation stored in the above locating server is a list of the key and algorithm corresponding to the locating server. The key corresponds to the algorithm, and the target algorithm only has a mapping relationship with the target key. In the relation series table, the target algorithm is searched to obtain the target key corresponding to the target algorithm.

After acquiring the target key, the positioning server determines a usage level for the target key. The usage level is used to indicate the transformation accuracy of the target key, and the usage level is sent to the target terminal. The determination of the level of use may be, but is not limited to, based on the accuracy of the target key, the complexity of the target key. The usage level may be, but is not limited to, increasing key accuracy, increasing key complexity, a variant formulation of the key.

In this embodiment, the specific types of the key and algorithm are not limited. The specific type of the usage level of the key is not limited.

The positioning server and the target terminal respectively locally transform the target key according to the transformation accuracy to obtain the positioning key. The positioning key and the target algorithm are encryption methods used by the positioning server and the target terminal to encrypt the data in the positioning process.

After obtaining the positioning key, the target terminal encrypts the positioning parameters required for the positioning computation using the positioning key and the target algorithm, and sends the encrypted positioning parameters to the positioning server. A positioning server uses a positioning key and a target algorithm to decrypt an encrypted positioning parameter, calculates and evaluates to obtain position information about a target terminal, and sends the position information encrypted using the positioning key and the target algorithm to the target terminal. The target terminal decrypts and obtains the location information by using the positioning key and the target algorithm, so as to complete the positioning of the target terminal.

By means of the described steps, a core network device only sends a target algorithm to a positioning server via a network, and the positioning server searches for a corresponding target key in a local relationship list, determining a usage level according to a target key, and sending the usage level to a target terminal, wherein the target terminal and a positioning server locally transform the target key according to the usage level, obtaining a positioning key, and encrypting positioning data using the positioning key and a target algorithm. Not only increasing the security of data transmission in a positioning process by means of encryption, but also preventing a target key from being intercepted by only transmitting a target algorithm to a positioning server, at the same time, locally generating a positioning key for data encryption by using a level, thereby further avoiding that a data encryption manner is illegally intercepted. Thus, the security of the positioning data in the transmission process is ensured, and the interception and decryption of the positioning data caused by the lack of security of the positioning data are avoided.

The present embodiment provides a terminal positioning method running on the described terminal. The terminal positioning method comprises the following steps:
In a case that a core network device responds to a positioning request and verification of a target device identifier is passed, receiving allocated encryption information, wherein the positioning request carries a terminal identifier of a target terminal which is requested to be positioned and a target device identifier of an initiating device which triggers the positioning request; the encryption information comprises a target key and a target algorithm corresponding to the target key;
receiving a usage level of a target key, and transforming the target key according to the usage level to obtain a positioning key; and
performing encryption on the positioning parameter by using a positioning key, and sending the encrypted positioning parameter to a positioning server, so that the positioning server uses the positioning parameter to obtain location information about a target terminal.

The above positioning key is obtained by transforming the target key according to the usage level. In a case that the target key and the usage level are determined, the obtained positioning key is determined. The target terminal locally generates the positioning key, thereby ensuring the security of the positioning key itself.

By means of the described steps, before a target terminal sends a positioning parameter, a core network device responds to a positioning request, verifies a target device identifier and allocates encryption information to the target terminal; the target terminal generates a positioning key according to a usage level and a target key, and encrypts the positioning parameter using the positioning key and a target algorithm, and sending the encrypted positioning parameter, so that the positioning parameter is difficult to be intercepted illegally, thereby improving the security during the process of sending the positioning parameter, avoiding that the positioning parameter is intercepted illegally, and solving the problem that a terminal is monitored illegally and private data of the terminal is leaked during the locating process due to insecurity of data transmission.

The present embodiment provides a terminal positioning method operating on the described positioning server. The terminal positioning method comprises the following steps:
In a case that a core network device responds to a positioning request and verification of a target device identifier is passed, receiving an allocated target algorithm, wherein the positioning request carries a terminal identifier of a target terminal which is requested to be positioned and a target device identifier of an initiating device which triggers the positioning request;
Acquiring a target key corresponding to a target algorithm from a mapping relationship stored locally, allocating a usage level for the target key, and sending the usage level to a target terminal, and at the same time, transforming the target key according to the usage level to obtain a positioning key;
In a case that an encrypted positioning parameter sent by a target terminal is received, using a positioning key to perform decryption so as to obtain the positioning parameter; and
The position information about the target terminal is obtained through calculation according to the positioning parameter, and the position information encrypted by the positioning key is sent to the target terminal.

The target key is obtained by the positioning server by searching the relationship list that stores the mapping relation between the indicator key and the algorithm. A positioning server receives data through a network, and only a target algorithm needs to be received to ensure security of a target key. Even if the target algorithm is intercepted illegally, the intercepted party cannot determine the corresponding key, and thus the data encrypted by the positioning server cannot be cracked.

The above-mentioned usage level is a transform manner of the target key determined by the positioning server according to the target key.

The above positioning key is obtained by changing the target key according to the usage level. In a case that the target key and the usage level are determined, the obtained positioning key is determined. The positioning server generates the positioning secret key locally, thus ensuring the security of the positioning secret key itself.

By ensuring the security of the target key and the positioning key, the security of the encrypted data transmitted by the positioning server in the positioning process is improved.

By means of the described steps, a positioning server can receive a target algorithm only In a case that a target device identifier is verified, and locally acquires the target key by means of a mapping relationship between a key and the algorithm. Further determining a usage level for a target key; locally generating a positioning key according to the target key and the usage level; decrypting a positioning parameter using the positioning key and a target algorithm to obtain position information; and encrypting the position information and then sending same to a target terminal. While the encryption location information ensures the security of data transmission, a mapping relationship is stored locally to protect a target key from being intercepted illegally due to network transmission, and at the same time, a positioning key is generated locally. In addition, the security of a positioning key used in data encryption is further protected, thereby improving the security of data transmission in a positioning process, and avoiding terminal information leakage caused by illicit interception of data in a transmission process.

Provided in the present embodiment is a terminal positioning system, which includes a target terminal, a core network device and a positioning server,
A core network device is configured to acquire a positioning request for positioning a target terminal, respond to the positioning request, verifying a target device identifier, and In a case that the target device identifier passes the verification, acquire encryption information allocated to the target terminal, send the encryption information to a target terminal, and send a target algorithm in the encryption information to a positioning server allocated for the target terminal, a positioning request carries a terminal identifier of a target terminal and a target device identifier of an initiating device which triggers the positioning request, the encryption information contains a target key and a target algorithm corresponding to the target key;
A positioning server is configured to receive a target algorithm, acquire a target key corresponding to the target algorithm from a mapping relationship stored locally, allocate a usage level for the target key, send the usage level to a target terminal, and at the same time, transform the target key according to the usage level to obtain a positioning key; receive an encrypted positioning parameter, and using a positioning key for decryption to obtain the positioning parameter; obtain the location information of the target terminal through calculation according to the positioning parameters, and send the location information encrypted by the positioning key to the target terminal; and
The target terminal is configured to receive the encryption information and the usage level of the target key, transform the target key according to the usage level, and obtain a positioning key; use a positioning key to encrypt a positioning parameter, and send the encrypted positioning parameter to a positioning server; receive the encrypted location information, and use a positioning key to decrypt same to obtain the location information.

By means of the terminal positioning system, when a core network device receives a positioning request, a device identifier of a positioning request initiator is verified; and In a case that the device identifier is verified, a key and an algorithm are allocated to a terminal and a positioning server, so that the terminal and the positioning server encrypt interaction data using the key and the algorithm. The present invention improves data security of a terminal and a positioning server when performing positioning data transmission, and solves the problem that transmission data is illegally acquired because there is no security mechanism for data transmission between the terminal and the positioning server. Further, since the algorithm is only sent by the positioning server for data transmission through the network, it is avoided that the key is acquired in the network transmission process. By ensuring the security of the key, the security of encrypted data transmission is further ensured, thereby preventing the key from being illegally acquired, thereby solving the problem that a terminal is illegally monitored and privacy data of the terminal is leaked during a positioning process due to insecurity of data transmission.

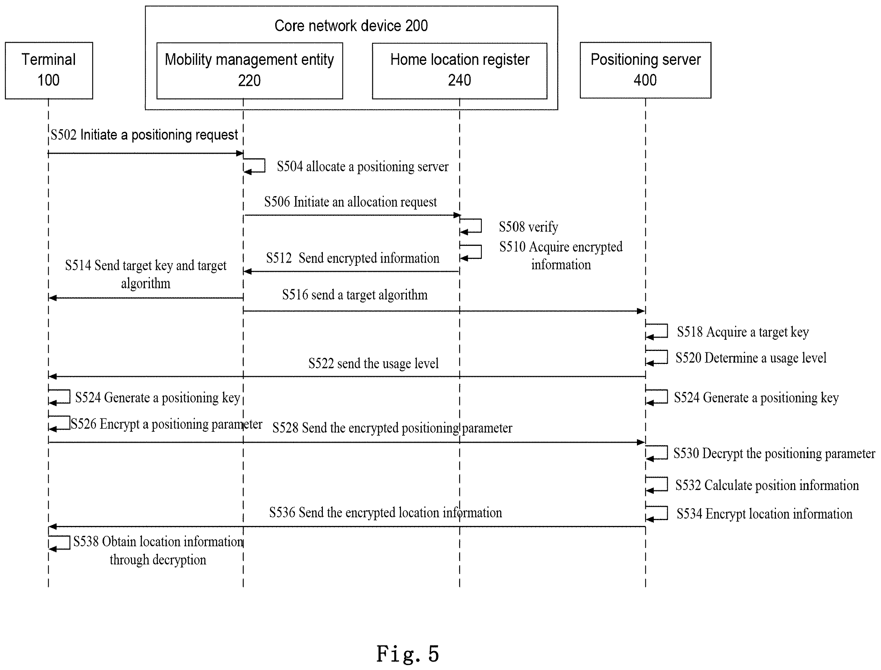

In some embodiments, as shown in Fig. 5, taking the terminal 100 initiating a positioning request for positioning itself as an example, the interaction process of the described terminal positioning method comprises the following steps S502 to S538.

Step S502: a positioning request is initiated. The terminal 100 sends a positioning request to the core network device 200, and the mobility management entity 220 in the core network device 200 receives the positioning request. The positioning request includes a target device identifier of an initiator (i.e., the terminal 100) that initiates the positioning request and a terminal identifier of the terminal 100 indicating the terminal to be positioned. In this embodiment, the target device identifier is consistent with the terminal identifier, and both are identifiers of the terminal 100.

Step S504: allocating a positioning server. After receiving the positioning request, the mobility management entity 220 allocates the positioning server 400 for the terminal 100 to calculate position information for the terminal 100.

Step S506: an allocation request is initiated. The mobility management entity 220 initiates an allocation request to the home location register 240, and the allocation request carries the terminal identifier of the terminal 100 and the server identifier of the positioning server 400.

Step S508: verification. The home location register 240 looks up the terminal identifier of the terminal 100 in its device identifier list, and determines that the terminal identifier of the terminal 100 exists in the device identifier list.

Step S510: acquiring encrypted information. The home location register 240 acquires a key corresponding to the terminal identifier through the terminal identifier of the terminal 100, determines in the key that a target key corresponding to the server identifier is Key1, determines according to the target key Key1 that a target algorithm is Alg1, and determines that the target key Key1 and the target algorithm Alg1 are encryption information.

Step S512: transmitting the encrypted information. The home location register 240 sends the target key Key1 and the target algorithm Alg1 to the mobility management entity 220.

Step S514: send the target key and the target algorithm. The mobility management entity 220 sends the received target key Key1 and the target algorithm Alg1 to the terminal 100.

Step S516: send the target algorithm. The mobility management entity 220 sends the target algorithm Alg1 to the positioning server 400.

Step S518: the target key is acquired. After receiving the target algorithm Alg1, the positioning server 400 searches its local relationship list for the target key Key1 which has an association relationship with the target algorithm Alg1.

Step S520: a use level is determined. After determining the target key Key1, the positioning server 400 determines that the usage level corresponding to the target key Key1 is the usage level X.

Step S522: transmitting the usage level. The positioning server 400 transmits the usage level X to the terminal 100.

Step S524: generating a positioning key. The terminal 100 and the positioning server 400 generate a positioning key Key00 from the target key Key1 and the usage level X, respectively, locally.

Step S526: encrypting the positioning parameters. The terminal 100 encrypts the positioning parameter by using the positioning key Key00 and the target algorithm Alg1 to obtain an encrypted positioning parameter.

Step S528: transmitting the encrypted positioning parameters. The terminal 100 sends the encrypted positioning parameters to the positioning server 400.

Step S530: decrypting the positioning parameters. The positioning server 400 decrypts the received encrypted positioning parameters by using the positioning key Key00 and the target algorithm Alg1, so as to obtain the positioning parameters.

Step S532: position information is calculated. The positioning server 400 obtains the position information used for indicating the position of the terminal 100 through calculation and evaluation according to the positioning parameters.

Step S534: encrypting the location information. The positioning server 400 encrypts the position information by using the positioning key Key00 and the target algorithm Alg1 to obtain the encrypted position information.

Step S536: transmitting the encrypted location information. The positioning server 400 sends the encrypted location information to the terminal 100.

Step S538: position information is obtained by decryption. After obtaining the encrypted location information, the terminal 100 decrypts the encrypted location information using the positioning key Key00 and the target algorithm Alg1 to obtain location information indicating its own location.

Through the description of the foregoing embodiments, a person skilled in the art may clearly understand that the method according to the foregoing embodiments may be implemented by software in addition to a necessary universal hardware platform, and definitely may also be implemented by hardware. However, in many cases, the former is a preferred implementation. Based on such understanding, the technical solutions of the present disclosure substantially or the part contributing to the related art may be embodied in the form of a software product. The computer software product may be stored in a storage medium (such as a ROM/RAM, a magnetic disk, or an optical disk), and include several instructions, a terminal positioning method used to enable a terminal device (which may be a mobile phone, a computer, a server, a network device, or the like) to execute each embodiment of the present disclosure.

Embodiments of the present disclosure further provide a computer readable storage medium. The computer readable storage medium stores a computer program. When being run by a processor, the computer program executes steps in any one of the foregoing method embodiments.

In some embodiments, the computer readable storage medium may include, but is not limited to, any medium that can store a computer program, such as a USB flash drive, a Read-Only Memory (ROM for short), a Random Access Memory (RAM for short), a removable hard disk, a magnetic disk, or an optical disc.

Embodiments of the present disclosure also provide an electronic device, which includes a memory and a processor. The memory stores a computer program. The processor is configured to run the computer program to execute steps in any one of the method embodiments.

In some embodiments, the electronic apparatus can further includes a transmission device and an input/output device, the transmission device is connected to the processor, and the input/output device is connected to the processor.

For a specific example of this embodiment, reference may be made to the examples described in the foregoing embodiments and exemplary embodiments, and details are not repeatedly described herein in this embodiment.

Obviously, those skilled in the art should understand that each module or each step of the present disclosure can be implemented by a universal computing device, can be centralized on a single computing device or distributed on a network composed of a plurality of computing devices, and can be implemented by program codes executable by the computing devices. Thus, they can be stored in a storage apparatus and executed by the calculation apparatus, and in some cases, the steps shown or described can be executed in a sequence different from that described here, or they are made into integrated circuit modules respectively, or a plurality of modules or steps therein are made into a single integrated circuit module to realize. As such, the present disclosure is not limited to any particular hardware and software combination.

The foregoing descriptions are merely exemplary embodiments of the present disclosure, but are not intended to limit the present disclosure. For those skilled in the art, the present disclosure may have various modifications and variations. Any modifications, equivalent replacements, improvements and the like made within the principle of the present disclosure shall belong to the scope of protection of the present disclosure.

## Claims

1. A terminal positioning method, comprising:
acquiring a positioning request for positioning a target terminal, wherein the positioning request carries a terminal identifier of the target terminal and a target device identifier of an initiating device which triggers the positioning request;
verifying the target device identifier in response to the positioning request;
in the case that the target device identifier is verified, acquiring encryption information allocated to the target terminal, wherein the encryption information comprises a target key and a target algorithm corresponding to the target key; and
sending the encryption information to the target terminal, and sending the target algorithm in the encryption information to a positioning server allocated for the target terminal, so that the target terminal and the positioning server use the encryption information to obtain location information about the target terminal.

2. The method according to claim 1, wherein verifying the target device identifier in response to the positioning request comprises:
looking up the target device identifier in a device identifier list locally stored;
in a case that the target device identifier is found in the device identifier list, determining that the target device identifier is verified; and
in a case that the target device identifier is not found in the device identifier list, determining that the target device identifier is not verified, and rejecting the positioning request.

3. The method according to claim 1, wherein in a case that the target device identifier is verified, acquiring the encryption information allocated to the target terminal comprises:
sending, by a mobility management entity, an allocation request to a home location register; and
acquiring the target key allocated by the home location register to the target terminal and the target algorithm corresponding to the target key.

4. The method according to claim 1, wherein acquiring the encryption information allocated to the target terminal comprises:
allocating the positioning server to the target terminal;
determining the target key corresponding to the positioning server from the key corresponding to the target terminal;
determining the target algorithm according to the target key; and
determining the target key and the target algorithm as the encryption information.

5. The method according to claim 1, wherein after sending the encryption information to the target terminal and sending the target algorithm in the encryption information to a positioning server allocated to the target terminal, the method further comprises:
receiving, by the target terminal, a usage level of the target key sent by the positioning server, and transforming the target key according to the usage level to obtain a positioning key;
encrypting, by the target terminal, a positioning parameter by using the positioning key, and sending the encrypted positioning parameter to the positioning server, so that the positioning server uses the positioning parameter to obtain the location information about the target terminal.

6. The method according to claim 1, wherein after sending the encryption information to the target terminal and sending the target algorithm in the encryption information to a positioning server allocated to the target terminal, the method further comprises:
in the case that the positioning server receives the target algorithm, acquiring the target key corresponding to the target algorithm from a mapping relationship locally stored, allocating a usage level to the target key, and sending the usage level to the target terminal, and at the same time, transforming the target key according to the usage level to obtain a positioning key;
in the case that the positioning server receives the encrypted positioning parameters sent by the target terminal, performing decryption by using the positioning key to obtain the positioning parameters; and
obtaining, by the positioning server, the location information of the target terminal through calculation based on the positioning parameter, and sending the location information encrypted by the positioning key to the target terminal.

7. A terminal positioning method, comprising:
in the case that a core network device responds to the positioning request and a target device identifier is verified, receiving allocated encryption information; wherein the positioning request carries a terminal identifier of a target terminal which requests positioning and the target device identifier of an initiating device which triggers the positioning request; the encryption information comprises a target key and a target algorithm corresponding to the target key;
receiving a usage level of the target key, and transforming the target key according to the usage level to obtain a positioning key; and
encrypting a positioning parameter by using the positioning key, and sending the encrypted positioning parameter to a positioning server, so that the positioning server obtains location information about the target terminal by using the positioning parameter.

8. A terminal positioning method, comprising:
in the case that a core network device responds to a positioning request and a target device identifier is verified, receiving an allocated target algorithm; wherein the positioning request carries a terminal identifier of a target terminal which requests positioning and the target device identifier of an initiating device which triggers the positioning request;
acquiring a target key corresponding to the target algorithm from a mapping relationship locally stored, allocating a usage level to the target key, and sending the usage level to the target terminal, and at the same time, transforming the target key according to the usage level to obtain a positioning key;
in a case that an encrypted positioning parameter sent by the target terminal is received, decrypting the encrypted positioning parameter by using the positioning key to obtain the positioning parameter; and
obtaining location information of the target terminal by calculation according to the positioning parameter, and sending the location information encrypted by the positioning key to the target terminal.

9. A terminal positioning system, comprising a target terminal, a core network device and a positioning server,
the core network device is configured to acquire a positioning request for positioning the target terminal, in response to the positioning request, verify a target device identifier, and in a case that the target device identifier is verified, acquire encryption information allocated to the target terminal, and send the encryption information to the target terminal, and send a target algorithm in the encryption information to a positioning server allocated to the target terminal; wherein the positioning request carries a terminal identifier of the target terminal and a target device identifier of an initiating device which triggers the positioning request, and the encryption information comprises a target key and a target algorithm corresponding to the target key;
the positioning server is configured to receive the target algorithm, acquire the target key corresponding to the target algorithm from a mapping relationship locally stored, allocate a usage level to the target key, send the usage level to the target terminal, and at the same time, transform the target key according to the usage level to obtain a positioning key; receive an encrypted positioning parameter, and using the positioning key to perform decryption to obtain the positioning parameter; obtain location information of the target terminal through calculation according to the positioning parameter, and sending the location information encrypted by the positioning key to the target terminal; and
the target terminal is configured to receive the encryption information and the usage level of the target key, and transform the target key according to the usage level to obtain the positioning key; encrypt the positioning parameter by using the positioning key, and send the encrypted positioning parameter to a positioning server; receive the encrypted location information, and perform decryption on the encrypted location information by using the positioning key to obtain the location information.

10. A computer readable storage medium, wherein a computer program is stored in the computer readable storage medium, and when the computer program is executed by a processor, causes the processor to perform the method as claimed in any one of claims 1 to 8.

11. An electronic device, comprising a memory and a processor, wherein the memory stores a computer program, and the processor is configured to run the computer program so as to execute the method as claimed in any one of claims 1 to 8.
